# EUROPEAN PATENT APPLICATION

(11) **EP 0 907 286 A2**
(43) Date of publication of application: **07.04.1999**
(21) Application number: 98307548.2
(22) Date of filing: 17.09.1998
(51) Int. Cl.: H04N 7/173

(54) **Terminal computer for acces to video servers and method of access to video servers**

(30) Priority: 18.09.1997 JP 253458/97
(71) Applicant: Matsushita Electric Industrial Co., Ltd., Kadoma-shi, Osaka-fu, 571-8501 (JP)
(72) Inventor: Yoshida, Yasuhiro, Fushimi-ku, Kyoto-shi, Kyoto-fu (JP); Harumoto, Hideaki, Moriguchi-shi, Osaka-fu (JP); Ishida, Takashi, Osaka-shi, Osaka-fu (JP)
(74) Representative: Barnfather, Karl Jon, Dr.

(57) **Abstract**

The present invention is so arranged that various requests issued by the video processing application 105 of the file input-output type are converted into requests adaptable to the stream type video server within the terminal computer and the access is executed to the stream type video server based on the said converted requests. Accordingly, the terminal computer is provided with a request type converter 103 which converts the file input-output type request into the stream type one. The request type converter 103 first issues a stream type sending request Ps on the basis of a file input-output type file open request Qo or the file input-output type first readout request Qr issued by the video processing application 105. According to the sending request Ps, stream data is received from the video server. A receiving means 1032 stores the received stream data in a buffer 1033. At the same time, a buffer transfer means 1034 forwards to the video processing application 105 the stream data stored in the buffer according to a readout request Qr issued by the video processing application 105.

## Description

The present invention relates to a terminal computer in a computer network and a method of access from a terminal computer to video servers.

It is fated that video moving image data are required to be continuous time-wise. In this regard, the video data fundamentally differ from the file information which is handled by usual information systems.

Video servers which read out such video data at a command from the terminal computer are classified according to communication formula into the stream type and the file input-output type.

The stream type video server is the type of video server which starts sending video data at a sending request from the terminal computer and keeps sending the requested video data until a stop request is received. The data processing method of this type is suitable for processing data like video data requiring time continuity because a vast quantity of video data can be transmitted in a short time. With the spread of the video server, the stream type has attracted attention, moving into the limelight, and is expected to find wide acceptance in the future.

The file input-output type video server, in the processing of reading out computer data, adapts the general communication method of reading out file data for reading out video data. In this system, in response to repeated requests to read a file of specifying the data offset and the size of sending data from the terminal computer, the video server repeats sending out the requested data in the specified size.

The file input-output type, because of an adoption of the established technique, is easy to handle. As it is predicted that the stream type of speedier data transmission system will spread widely in the future, the stream type will share the video server market with the file input-output type. And the interchangeability between those two types will be necessary.

No description or illustration will be made of the video server system provided with a video server and terminal computers which are connected to the former via network, because the principle is well known. There is no explanation on the configuration of both the file input-output type video server and the stream type video server either, because they are not directly related to the present invention.

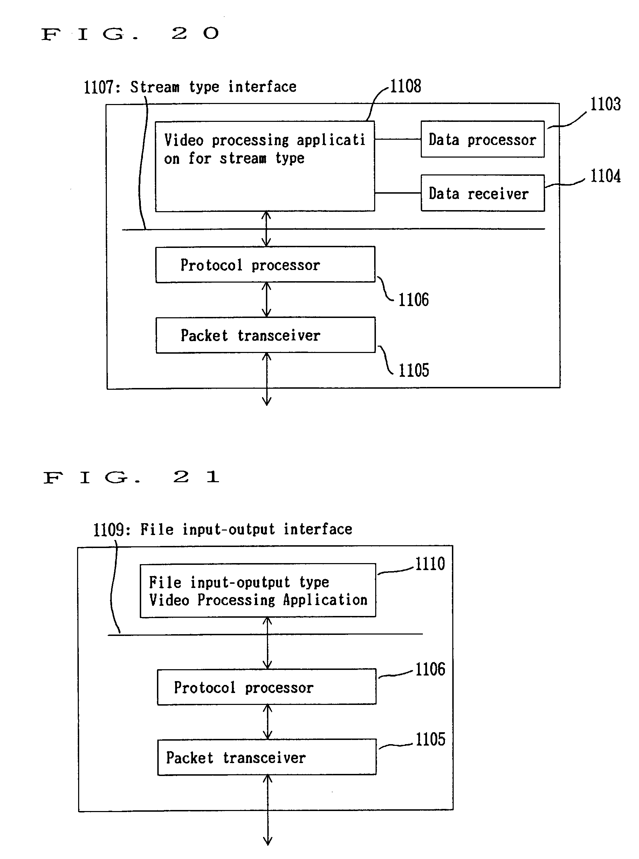

Fig. 20 is a block function diagram showing the internal configuration of the prior art terminal computer adapted for the stream type video sever.

The terminal computer adapted for the stream type video server consists of a packet transceiver 1105, a protocol processor 1106, a stream type interface 1107 and a stream type video processing application 1108.

In the above composition, when the stream type video processing application 1108 issues a sending request, the protocol processor 1106 prepares a packet according to the request and the said packet is sent out from the packet transceiver 1105. And when the data is returned in answer to the aforesaid sending request, the packet transceiver 1105 receives the returned packet. The protocol processor 1106 analyzes the contents of the returned packet and transfers the analyzed results to the video processing application 1108. The video processing application 1108 then starts up a data receiver 1104 and a data processor 1103 as described in the following.

The data receiver 1104 stores received stream data one after another in a buffer. When the remaining capacity of the buffer is below a specific level, the data receiver 1104 issues a pause request (a request stops sending data temporarily). According to the said request, the video server temporarily suspends the sending of data.

The data stored in the buffer as described above are taken out one after another by the data processor 1103 and are put on display, for example. And when the remaining capacity of the buffer is over a specific level, a resending request is issued. If the video processing application 1108 issues a stop request, the video server stops sending out data.

In Fig. 20, the stream type interface 1107 identifies the kind of request which is given from the video processing application 1108 to the protocol processor 1106.

Fig. 21 is a block functional diagram showing the configuration of the prior art terminal computer adapted for the file input-output type video server.

The difference in mechanism is only that the file input-output type comprises a file input-output interface 1109 and a video processing application 1110 adapted for the file input-output type instead of the stream type interface 1107 and the video processing application 1108 adapted for the stream type. The requests to be issued are different from those of the stream type as described below.

When the video processing application 1110 issues a file open request, the video server opens the file in answer to the request and sends back the results to the video processing application 1110 of the terminal computer. Then, if the operator inputs necessary data such as file identification (ID), a readout request will be issued and a specific size, 8 kilobytes, for example, of data will be transmitted from the video server to the terminal computer according to the request. On receiving this data, the video processing application 1110 issues again the subsequent readout request and receives another batch of data of the specific size. This process is repeated until no specified data are left in the video server or the operator takes procedures that the video processing application 1110 will not issue the readout request any more.

In the aforesaid conventional video server network as described above, the stream type video server allows only the terminal computer equipped with the stream type video processing application to write and read data, while the file input-output type video server allows only the terminal computer equipped with the file input-output type video processing application to write and read data.

The communication protocol between the file input-output type video server and the terminal computer mounted with the file input-output type video processing application has already been standardized on the basis of the conventional procedure of reading and writing by computer and installed in the usual terminal computer as processing means.

But there is no formula standardized for communication between the stream type video server and the terminal computer equipped with the stream type video processing application. For the purpose, a new video processing application program has to be so prepared for the terminal computer as to adapt for the data processing in the stream type video server.

Apparently it is cheaper if a terminal computer equipped with the file input-output type video processing application is available, because the communication protocol has already been standardized. However, the problem is that the terminal computer equipped with the file input-output type video processing application can not access to the stream type video server.

The present invention is proposed for such a problem encountered with the prior art terminal computer equipped with the file input-output type video processing application. And it is an object of the present invention to provide a system and method of access to the stream type video server by the terminal computer equipped with the file input-output type video processing application adapted for the file input-output type video server and also a terminal computer applicable for the system and method.

In order to achieve the foregoing object, the present invention adopts the means described below on the file input-output type terminal computer, that is, in a computer network comprised a plurality of video servers stored with video data and a plurality of terminal computers equipped with video processing application, how to execute the access to a specific video server according to a request from a specific terminal computer.

That is to say, the present invention is so arranged that various requests issued by the video processing application 105 of the file input-output type are converted into requests adaptable to the stream type video server within the terminal computer and the access is executed to the stream type video server based on the said converted requests. Accordingly, the terminal computer is provided with a request type converter 103 which converts the file input-output type request into the stream type one.

With the abovementioned provided means, the conversion is made as described below.

The request type converter 103 first issues a stream type sending request Ps on the basis of a file input-output type file open request Qo or the file input-output type first readout request Qr issued by the video processing application 105.

According to the sending request Ps, stream data is received from the video server. A receiving means 1032 stores the received stream data in a buffer 1033. At the same time, a buffer transfer means 1034 forwards to the video processing application 105 the stream data stored in the buffer according to a readout request Qr issued by the video processing application 105.

When the storing of data brings down the remaining capacity of the buffer 1033 below a specific level, the buffer transfer means 1034 issues a send pause request Pt, and the video server pauses sending data for a time being.

When the remaining capacity of the buffer 1033 is above a specific level after the buffer transfer means 1034 forwards the data in the buffer 1033 to the video processing application 105, the buffer transfer means 1034 issues a resending request Pr.

With those arrangements and procedure, the file input-output terminal computer can access to video data in the stream type video server. While some modifications have to be made in the OS compartment in the terminal computer, the conventional file input-output type video processing application can be available to access to the stream type video server without major changes. Accordingly that provides an inexpensive system.

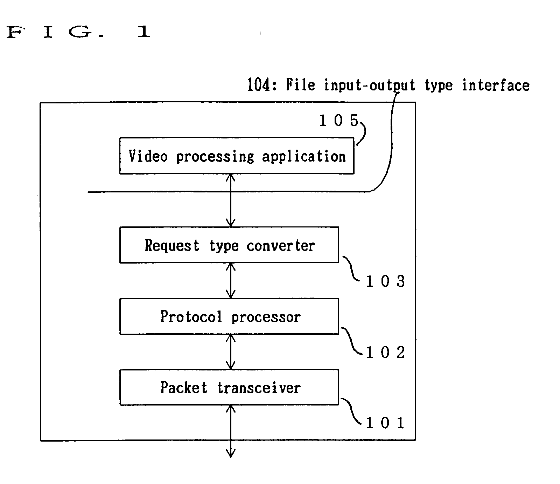

Fig. 1 is a block diagram showing the overall arrangement of a system according to the present invention.

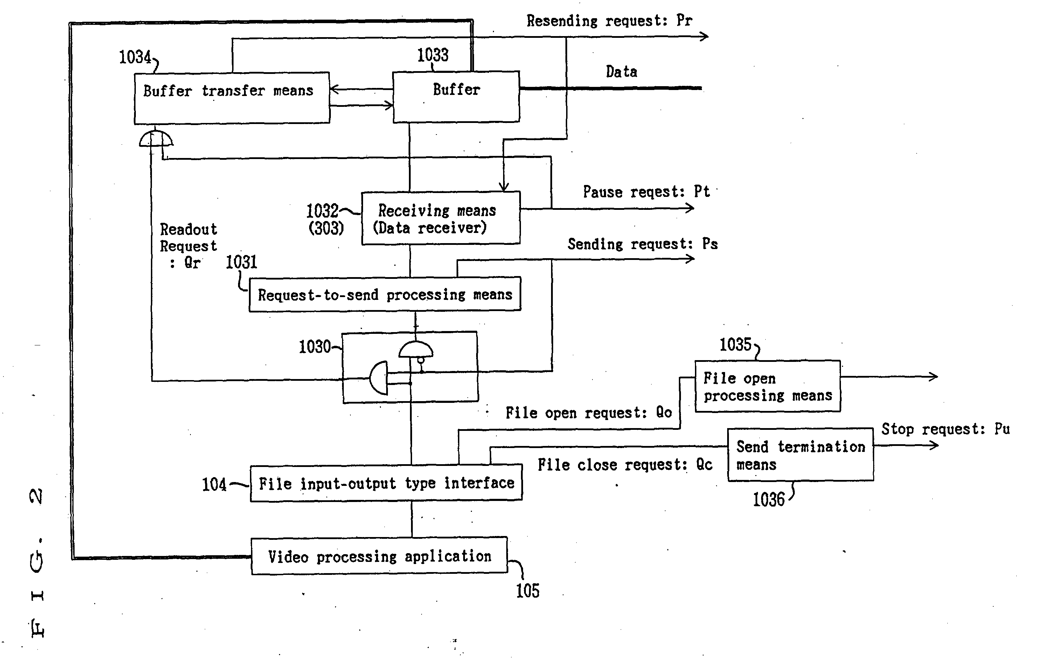

Fig. 2 is a block functional diagram of the request type converter in Embodiment 1 of the present invention.

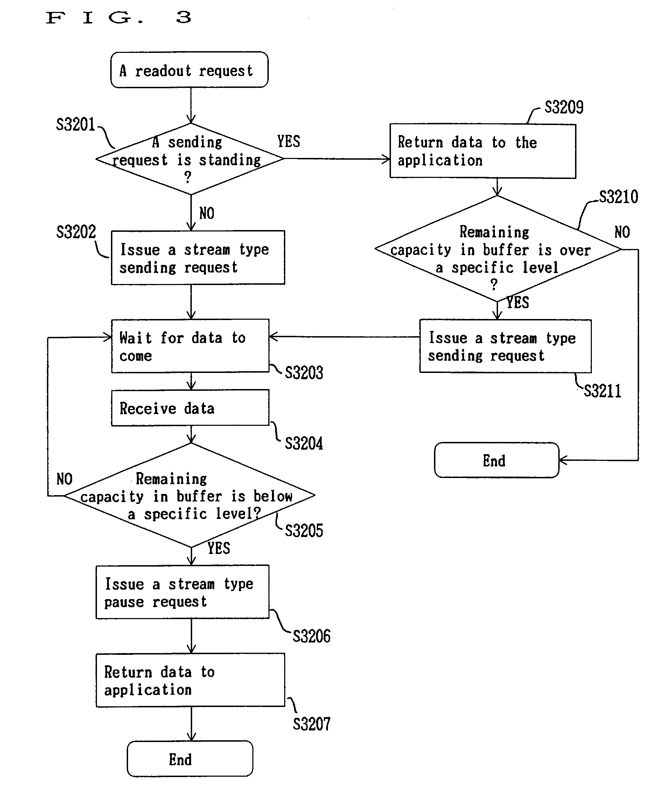

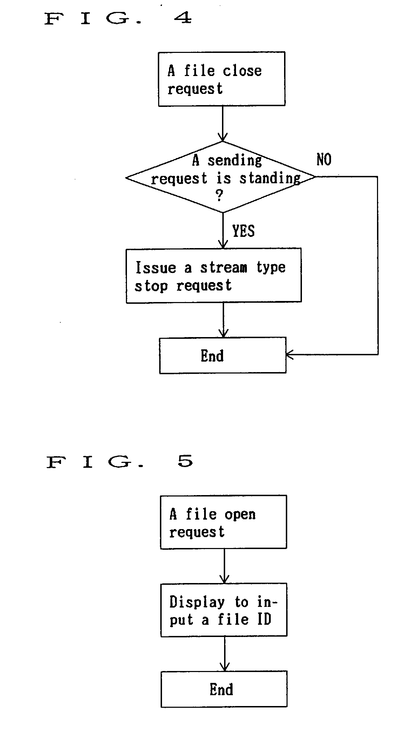

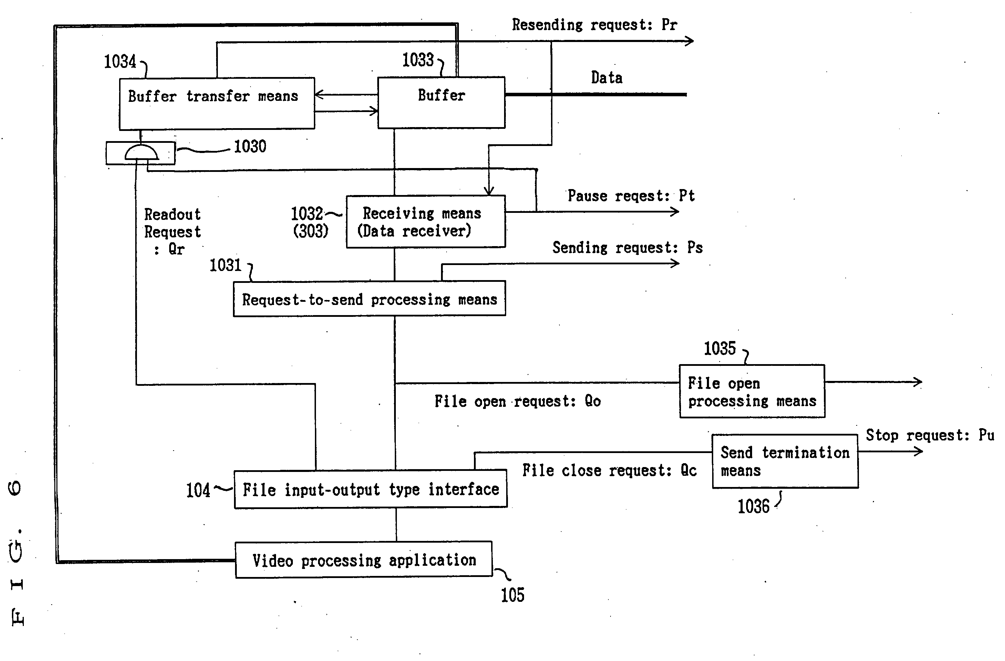

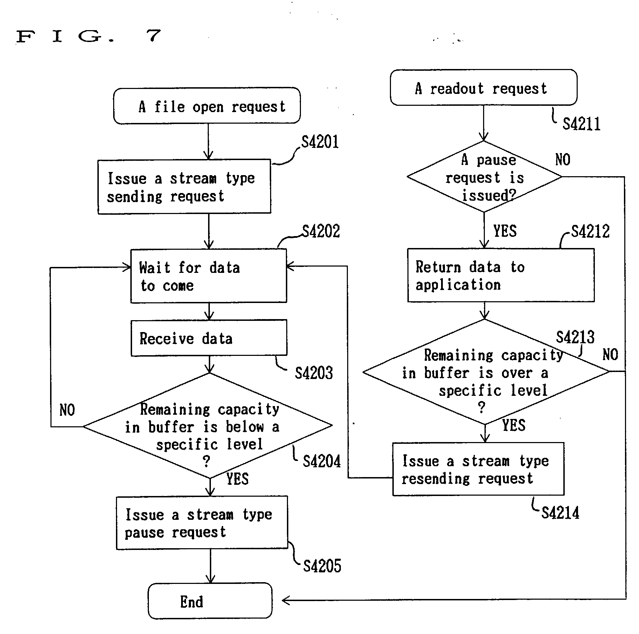

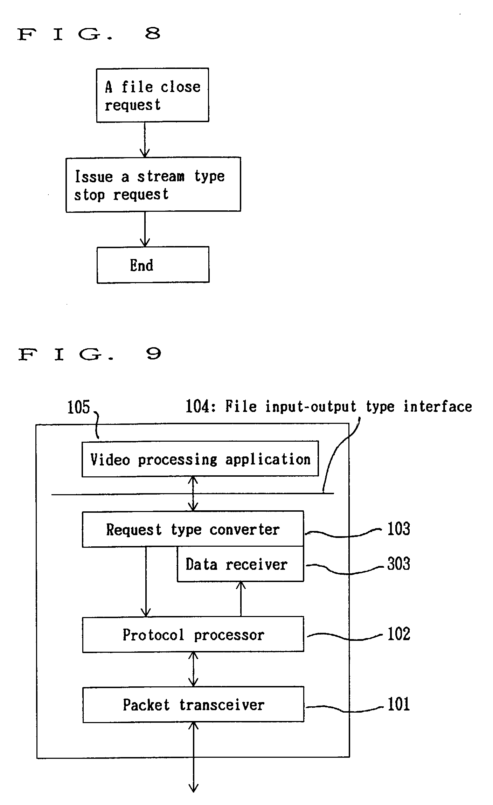

Fig. 3 is a flowchart showing the operating process in Embodiment 1 of the present invention.

Fig. 4 is a flowchart showing the operating process in Embodiment 1 of the present invention.

Fig. 5 is a flowchart showing the operating process in Embodiment 1 of the present invention.

Fig. 6 is a block functional diagram of the request type converter in Embodiment 2 of the present invention.

Fig. 7 is a flowchart showing the operating process in Embodiment 2 of the present invention.

Fig. 8 is a flowchart showing the operating process in Embodiment 2 of the present invention.

Fig. 9 is a block diagram showing the configuration of another system according to the present invention.

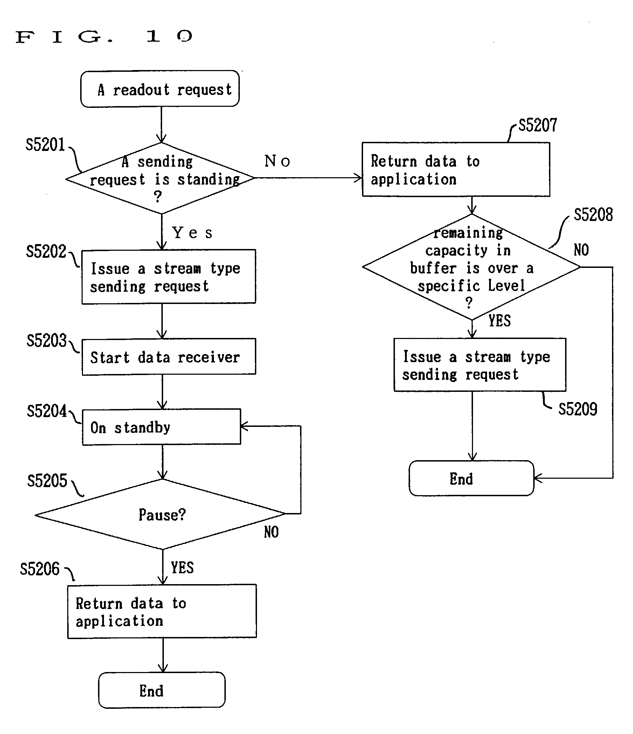

Fig. 10 is a flowchart showing the operating process in Embodiment 3 of the present invention.

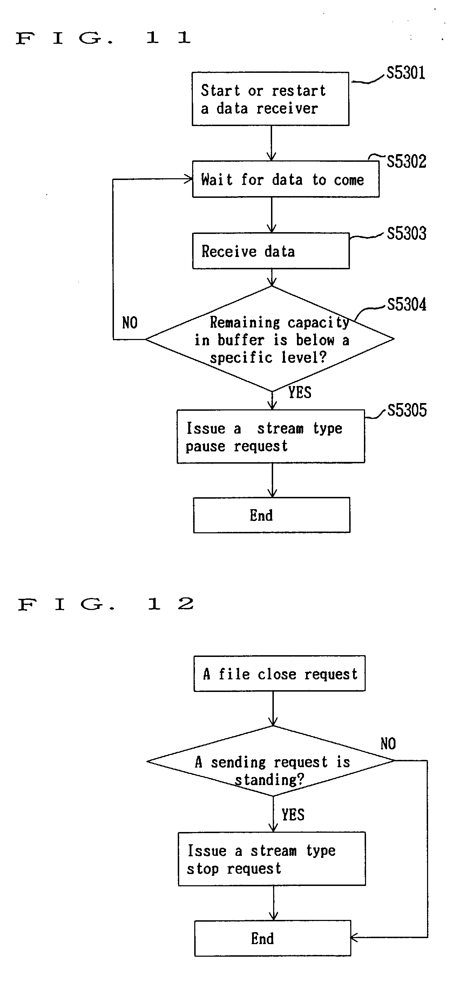

Fig. 11 is a flowchart showing the operating process in Embodiment 3 of the present invention.

Fig. 12 is a flowchart showing the operating process in Embodiment 3 of the present invention.

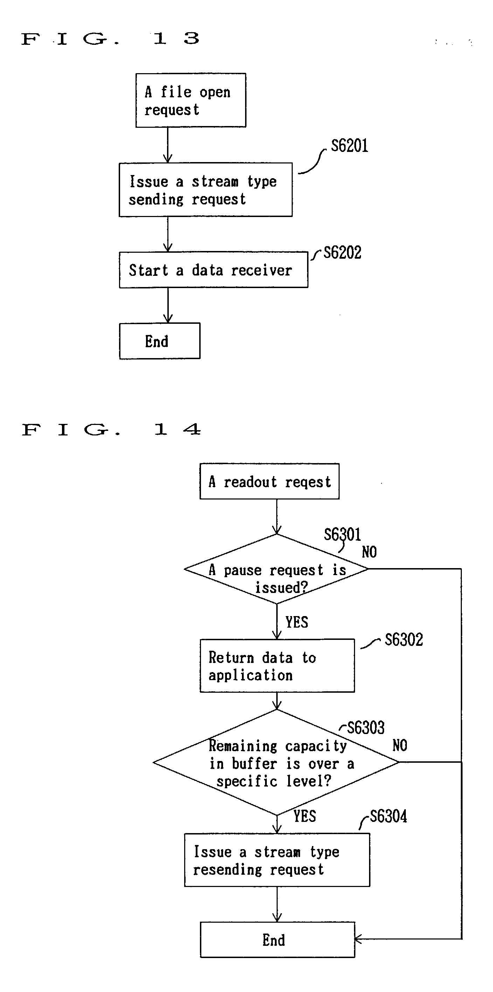

Fig. 13 is a flowchart showing the operating process in Embodiment 4 of the present invention.

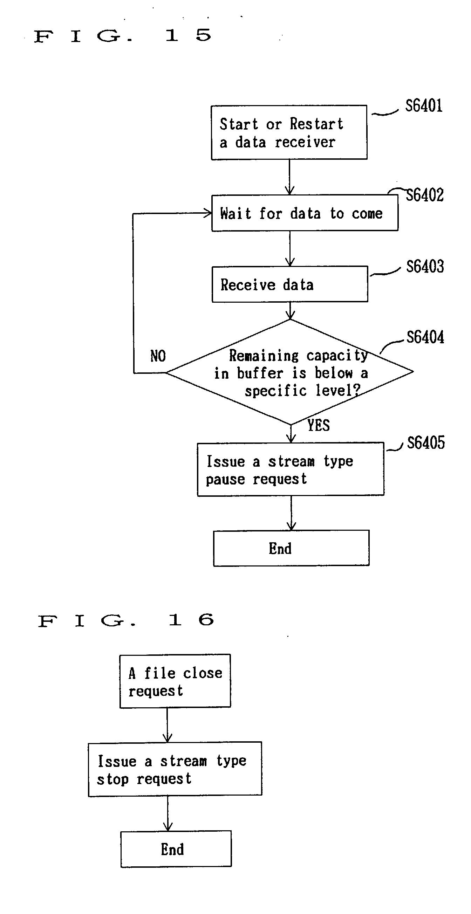

Fig. 14 is a flowchart showing the operating process in Embodiment 4 of the present invention.

Fig. 15 is a flowchart showing the operating process in Embodiment 4 of the present invention.

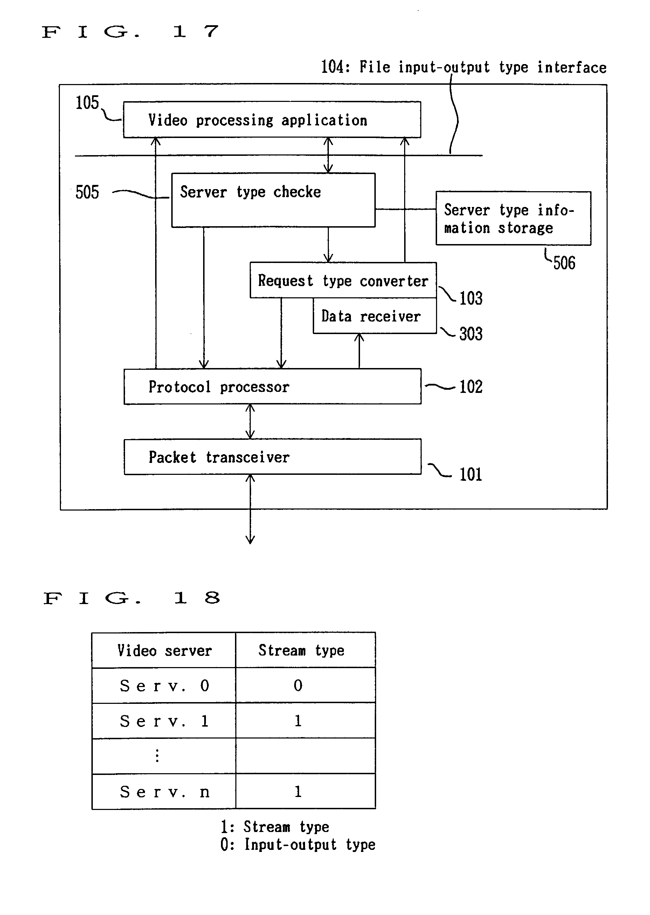

Fig. 16 is a flowchart showing the operating process in Embodiment 4 of the present invention.

Fig. 17 is a block diagram showing the configuration of the system in Embodiment 5 of the present invention.

Fig. 18 is a conceptional diagram of a table used in Embodiment 5 of the present invention.

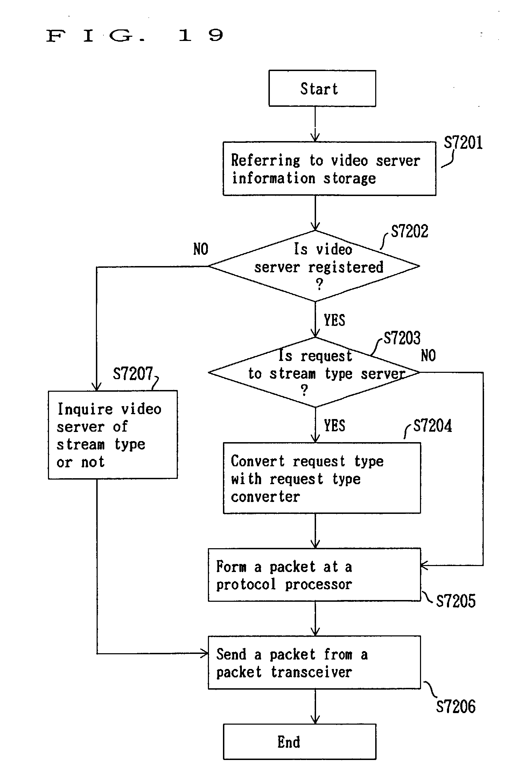

Fig. 19 is a flowchart showing the operating process in Embodiment 5 of the present invention.

Fig. 20 is a block diagram of the prior art stream type terminal computer.

Fig. 21 is a block diagram of the prior art file input-output type terminal computer.

### EMBODIMENT 1

Fig. 1 illustrates the basic arrangements in a terminal computer as the first embodiment of the present invention.

Like the prior art terminal computer adapted for the file input-output type server, the terminal computer according to the present invention comprises a packet transciver 101, a protocol processor 102, a file input-output interface 104 and a file input-output type video processing application 105 (which is referred briefly as a video processing application hereinafter except in case of necessity). The terminal computer according to the present invention is furthermore provided with a request type converter 103 which represents the core of the present invention. The request type converter 103 converts the file input-output type request into a stream type one. The file input-output interface 104 (which is referred briefly as an interface hereinafter) identifies the kind of a request from the video processing application 105, for example, whether it is a file open request or a readout request, and then transports the results to the request type converter 103.

In the above configuration, the request type converter 103 receives file input-output type requests such as a file open request, a readout request and a file close request from the video processing application 105 through the interface 104. Receiving the said file input-output type request, according to the following procedure as described in Fig.4, the request type converter 103 issues to the video server a stream type request, that is, a sending request, a stop request, a pause request or a resending request. The received stream type request is then forwarded to the video server through the protocol processor 102 and the packet transceiver 101.

The video server received the said requests returns the data adapted to the said requested data, which is received by the request type converter 103 through the packet transceiver 101 and the protocol processor 102 in the terminal computer, and then forwarded to the video processing application 106. The typical transfer rate is 1.5 Mbps or so, but the available rate ranges from hundreds of Kbps (audio) to several Mbps (video).

Fig. 2 is a more detailed block diagram of the request type converter used in the present invention, and the flow charts of Figs. 3 to 5 show the operating process of the terminal computer. The file opening processing means 1035 first is started up according to the file open request issued by the video processing application 105 and readies the computer for the operator to input information such as file ID etc.

When the operator inputs information of file ID, etc., then the video processing application 105 issues a first readout request Qr. The readout request Qr adapted to the file input-output type video server is a request packet issued intermittently in order to request a specific size, 8 kilobytes, for example, of data as mentioned above. The first request is a readout request Qr received when a sending request Ps has not been issued yet to the stream type video server as described later, which is discriminated by an identification means 1030. On the basis of the discriminated results, a request-to-send processing means 1031 issues a stream type sending request Ps (Fig. 3, Steps S3201 to S3202). The sending request Ps starts the receiving means 1032, which then goes into standby until video data is returned from the video server (Fig. 3, Step S3203).

The stream type video server returns video data in answer to the sending request Ps. The video data is received by the request type converter 103 through the packet transceiver 101 and the protocol processor 102. The receiving means 1032 carries out a procedure for storing the said received stream data in the buffer 1033 (Fig. 3, Step S3024). The receiving means 1032 supervises the available capacity of the buffer 1033, and issues to the video server a pause request Pt when the remaining capacity is below a specific level (Fig. 3, Steps S3205 to S3206). Then, the receiving means 1032 goes into standby until a resending request Pr is received as described later. Of the full capacity size of the buffer, several hundred Kbytes is used. The typical use is 256 Kbytes or so. The remaining capacity size at which a stop request is issued is 0 to 128 Kbytes, typically 32 Kbytes.

In order to transfer the stream data thus stored in the buffer 1033 to the video processing application side, a pause request Pt is issued from the receiving means 1032, and then the buffer transfer means 1034 is started to transfer a specific size of data to the video processing application 105. Upon receiving the data, the video processing application 105 issues the next readout request Or. The identification means 1030 identifies this readout request Or as the readout request Qr issued while the sending request is still standing, and then the buffer transfer means 1034 continues to work and the transfer of a specific size of data from the buffer 1033 is repeated (Fig. 3, Step S3209).

The buffer transfer means 1034 supervises the level of the remaining capacity of the buffer 1033. When the remaining capacity is above a specific level, the buffer transfer means 1034 issues a resending request Pr (Fig. 3, Steps S3210 to S3211). Then, the receiving means 1032 restarts the receiving process. Directed by the operator, the video processing application 105 issues a file close request Qc. The interface 104 then judges the contents of the request and starts a send termination means 1036, and a stop request Pu is issued and the sending process ends.

As set forth above, the present embodiment is provided with the request type converter 103 in the terminal computer, which converts a file input-output type request issued by the video processing application 105 into a stream type request, so that it is possible to communicate with the stream type video server by using a usual video processing application installed in the file input-output type terminal computer.

### EMBODIMENT 2

There is explained a second embodiment of the terminal computer of the present invention as hereinafter.

As the configuration of the terminal computer itself is as same as that of Embodiment 1, it is not described in this embodiment.

Fig. 6 is a more detailed block diagram of the request type converter 103 of Embodiment 2, while Figs. 7 and 8 are flow charts showing the operating process.

The interface 104 receives a file open request Qo from the video processing application 105 and then starts the file opening processing means 1035 to do the procedure necessary for opening a file. In parallel with that, the request-to-processing means 1031 is started to issue a stream type sending request Ps, and the receiving means 1032 is also started (Fig. 7, Step S4201). Thereafter, the receiving means 1032 waits for receiving data from the video server and stores the stream data in the buffer 1033 one after another (Fig. 7, Steps S4202 to S4204). When the remaining capacity of the buffer is below a specific level as a result, the receiving means 1032 issues a pause request Pt and goes into standby. That is the end of the process (Fig. 7, Step S4205).

In case that the operator inputs necessary information of file ID ect. in a procedure for opening a file, a readout request Qr is issued by the video processing application 105. The said readout request Qr starts the buffer transfer means 1034 if the receiving means 1032 has issued a pause request Pt (see the identification means 1030), and the said stream data stored in the buffer 1033 is transferred in a specific size to the video processing application 105 (Fig. 7, Steps S4211 to S4212).

As set forth above, the readout request Or is issued at each time when the video processing application 105 receives the specific size of data, the transfer of data is repeated. When the remaining capacity of the buffer 1033 is above a specific level, the buffer transfer means 1034 issues a resending request Pr and restarts the receiving means 1032 (Fig. 7, Steps S4213 to S4214).

Upon receiving a file close request Qc from the video processing application 105 as shown in Fig 8, the send termination means 1036 is started to issue a stop request Pu to the video server, and the process ends.

As illustrated, the present embodiment is slightly different from Embodiment 1 in its working. At the time of issuing a file open request Qo, a stream type sending request Ps is issued. Before a readout request Or is issued, the stream data is preread in the buffer 1033. Thus, in addition to the effects achieved in Embodiment 1, the present embodiment offers an advantage of speeding up the response of the video processing application to the file input-output type reading request Or.

### EMBODIMENT 3

Fig. 9 is a block diagram showing a system configuration of a terminal computer as a third embodiment of the present invention, while Figs. 10 to 12 illustrate the operating process in flow charts. As the details of the request type converter in this embodiment are almost the same as those in Fig. 2, the present embodiment is explained with reference to Fig. 2.

The terminal computer, which is the the same as in Embodiment 1, comprises the packet tranceiver 101, the protocol processor 102, the request type converter 103, the file input-output interface 104 and the video processing application 105. But in the present embodiment, it is so configured that the receiving means 1032 is separated from the request type converter 103 in Embodiment 1. The separated receiving means is hereinafter referred to as data receiver 303.

The request type converter 103 receives a file input-output type request from the video processing application 105 through the interface 104 and converts the said request into a stream type one, which is then forwarded to the video server through the protocol processor 102 and the packet transceiver 101 as in Embodiment 1. The video server received the said request returns data adapted to the said request forwarding to the data receiver 303 through the packet transceiver 101 and the protocol processor 102. The data received by the data receiver 303 is transfered to the video processing application 105 by the request type converter 103.

The further details of the operating process are hereinafter explained with reference to the block diagram of Fig. 2 and the flow charts of Figs. 10 to 12.

As in Embodiment 1, when a file open request Qo is issued from the video processing application 105, the file opening processing means 1035 is started to do the procedure for opening a file and the file opening process comes to an end.

When the operator inputs necessary information of file ID, etc. with the file opened, the video processing application 105 issues a readout request Qr. On receiving the readout request Qr from the video processing application 105, the identification means 1030 confirms that sending request Ps is not issued, and then the request-to-send processing means 1031 is started. The request-to-send processing means 1031 thus started issuing to the video server a sending request Ps and at the same time starts up the data receiver 303, and then goes into a standby state (Fig. 10, Steps S5201 to S5204).

Meanwhile, the data receiver 303 thus started up, along with the request type converter 103, start to receiving data. When the data receiver 303 receives and stores data in the buffer 1033, the remaining capacity of the buffer 1033 is below a specific level and the data receiver 303 issues a stream type pause request Pt. This goes into a standby state (Fig. 11, Steps S5301 to S5305).

Thus, the video server stops sending data temporarily and the buffer transfer means 1034 is started to transfer data in a specific size from the buffer 1033 to the video processing application 105 (Fig. 10, Steps S5205 to S5206).

When the buffer transfer means 1034 transfers the first data in the specific size to the video processing application 105, the video processing application 105 issues again a readout request Qr. When this readout request Qr is issued, the request-to-send processing means 1031 has already been started. Therefore the readout request Qr keeps acting the buffer transfer means 1034 and the transfer of the specific size of data to the video processing application 105 is repeated (Fig. 10, Steps S5207 to S5208). And if the remaining capacity of the buffer 1033 is above a specific level, a resending request Pr is issued to the video server. According to the resending request Pr, the data receiver 303 is called back from the standby state and restarted (Fig. 10, S5209).

To a file close request Qc, the send termination means 1036 issues a stop request Pu and the process comes to an end as in the previous two embodiments.

As mentioned above, the data receiver 303 (the receiving means 1032) is separated from the request type converter 103 in the present embodiment. The data receiver 303, in spite of receiving various requests as start, standby or restart from the request type converter 103, acts almost independently of the request type converter 103 which works in relation to the video processing application 105. Therefore in case that the transfer rate of data returned from the video server goes up, it does not affect the transfer of data to the video processing application 105 and prevent the occurrence of problems as the snapping of image stream.

### EMBODIMENT 4

Figs. 13 to 16 show an operating process in still another embodiment of the present invention. The basic configuration of the terminal computer of the present embodiment is the same as in Fig. 9, and there is no illustration or description thereof. As the working of the request type converter in the present embodiment is about the same as in Fig. 6, the present embodiment is hereinafter explained with reference to Fig. 6 and Figs. 13 to 16.

The present embodiment is basically a combination of Embodiment 3 and Embodiment 2. That is, it is so arranged that the receiving means 1032 is separated from the file input-output stream type converter 103 and that a stream type sending request Ps is formed utilizing a file input-output type file open request Qo. In the present embodiment, too, the separated receiving means 1032 is treated as data receiver 303.

According to the instruction of an operator, the video processing application 105 issues a file open request Qo, and then the file opening processing means 1035 is started up. In parallel, the request-to-send processing means 1031 is started to issue a sending request Ps to the video server. Furthermore, the data receiver 303 is started up (Fig. 13, Steps S6201 to S6202).

The data receiver 303 thus started up waits for data to come and when data comes, the data receiver continues to receive the data until the capacity of the buffer 1033 is used up. If it remains no capacity left in a buffer, the data receiver 303 issues a pause request Pt to the video server and goes into a standby state (Fig. 15, Steps S6401 to S6405).

After the file open request Qo is issued, the operator inputs necessary information of file ID, etc., and the video processing application 105 issues a file input-output type readout request Qr. The readout request Qr starts the buffer transfer means 1034 if the data receiver 303 has issued a pause request Pt (see the identification means 1030). And the data stored in the buffer 1033 is transferred to the video processing application 105 (Fig. 14, Steps S6301 to S6303). Wen the remaining capacity of the buffer 1033 is above a specific level, a resending request Pr is issued to the video server and the data receiver 303 is called back from the standby state and restarted (Fig. 14, Step S6304).

In response to a file close request Qc, the send termination means 1036 starts up and takes action to close the file, issuing a stop request Pu.

As described above, the present embodiment is so arranged that the request type converter 103 is separated from the data receiver 303 and that a stream type sending request Ps is issued on the basis of a file input-output type file open request Qo. Although the data receiver 303 recives requests of start-up, standby and restart from the request type converter 103, the data receiver 303 works almost independently of the request type converter 103 which works in relation to the video processing application 105. Therefore, even if the transfer rate of data returned from the video server goes up, it does not affect the transfer of data to the video processing application 105 and prevents the occurrence of problems as the snapping of image stream.

### EMBODIMENT 5

Fig. 17 illustrates the outline of a further embodiment of the present invention, and Fig. 19 is a flowchart showing the operating process thereof.

As the previous three embodiments, the present embodiment comprises the packet transceiver 101, the protocol processor 102, the data receiver 303, the request type converter 103, the file input-output interface 104 and the video processing application 105. In addition, the present embodiment is provided with a stream type video server checker 505 and a video server type information storage 506.

In the video server type information storage 506 stores two kinds of codes in pairs. As in the table shown in Fig. 18, one is to identify the video server or not and the other is to indicate that the type of the video server is the file input-output type or the stream type. When the video processing application 105 issues a file open request, the file open request is given to the sever type checker 505.

As the file open request contains equipment ID, the server type checker 505, with reference to the table in the server information storage 506, discriminates whether the video server storing the requested file is registered on the table or not (Fig. 19, Steps S7201 to S7202). In case the video server is registered with the table, the server type checker 505 then discriminates whether the request is directed to the stream type server or not (Fig. 19, Step S7203). If it found that the request is of the stream type, the request type converter 103 receives the file input-output type request, which is converted into a stream type request in one of the processes described in Embodiments 3 or 4. The request is then edited in a packet and transmitted to the object server (Fig. 19, Steps S7204, S7205 to S7206). It can also be so configured that the request type converter 103 is not separated from the data receiver 303. In that case, the file input-output type request is turned into a stream type one in the process described in Embodiments 1 and 2.

In response to the request, the data adapted to the request is returned to the terminal computer from the video server. The data thus returned is received by the data receiver 303 (data receiving means 1032) through packet transceiver 101 and protocol processing means 102, and the request type converter 103 passes on to the video processing application 508 the data received by the data receiver 303.

In case the video server finds the request is not of the stream type in the type identifying step, the request from the video processing application 105 is transmitted in the original form, that is, the file input-output type request as it is, to the video server through the protocol processor 102 and the packet transceiver 101 (see Fig. 19, Steps S7203: No - S7205). The video server in turn returns data adapted to the request, which is received through the protocol processor 102 and the packet transceiver 101 and turned over to the video processing application 105.

In case it is found that the video server as access target is not registered on the table in the server type information storage 506, the target video server is inquired if it is of the stream type or not (Fig. 19, Step S7202: No - S7207). The request type converter 103 receives and registers the reply on the table in the server type information storage 506 and issues various kinds of requests in accordance with reply.

In the present embodiment, as shown above, the terminal computer is provided with the server type checker 505 within the system which judges whether a request from the video processing application 105 is one directed at the stream type video server or not. And it is so arranged that requests to the file input-output type video server bypass the request type converter 103. Therefore, in addition to the merits of Embodiments 1 to 4, the present embodiment has an advantage that it is possible to access to the stream type video server as well as to the conventional file input-output video server.

As set forth above, the present invention makes it possible to communicate with the stream type video server by using the conventional file input-output type video processing application. With provision of a checking means in order to judge whether the targeted server is the file input-output type or the stream type, the conventional file input-output type video processing application can communicate with either the stream type video server or the file input-output type video server.

## Claims

1. A terminal computer for access to video servers in a computer network formed of a plurality of video servers storing video data and a plurality of terminal computers provided with video processing applications, comprising;
a request type converter which converts from various requests of the file input-output type issued by said video processing applications into requests adapted for access to the stream type video server.

2. A terminal computer for access to video servers as defined in claim 1, wherein said request type converter comprising;
a request-to-send processing means for issuing a stream type sending request on the basis of a file input-output type file open request or a first file input-output type readout request issued by the video processing application and,
a receiving means for receiving and storing in a buffer stream data obtained from the video server in answer to said sending request.

3. A terminal computer for access to video servers as defined in claim 2, wherein said receiving means issues a stream type pause request (request to stop temporarily sending data) when the remaining capacity of said buffer is below a specific level.

4. A terminal computer for access to video servers as defined in claim 2, which is provided with a buffer transfer means for transferring data stored in said buffer to the storage means of the video processing application on the basis of a readout request made by the video processing application.

5. A terminal computer for access to video servers as defined in claim 4, wherein said buffer transfer means furthermore issues a stream type resending request when the remaining capacity of said buffer is above a specific level.

6. A terminal computer for access to video servers as defined in claim 4 or claim 5, wherein said request-to-send processing means issues a sending request on the basis of the first readout request and the said receiving means issues a pause request, followed by the buffer transfer means carrying out the first data transfer.

7. A terminal computer for access to video servers as defined in claim 4 or claim 5, wherein said buffer transfer means carries out data transfer on the basis of a readout request made by the video processing application after said sending request is issued.

8. A terminal computer for access to video servers as defined in claim 4 or claim 5, wherein said request-to-send processing means issues a sending request on the basis of a file open request and the buffer transfer means checks that said receiving means issues a pause request, and then carries out a data transfer procedure on the basis of a readout request.

9. A terminal computer for access to video servers as defined in claim 4 or claim 5, wherein said receive processing means is started up by the request-to-send processing means issuing a sending request and carries out a receiving procedure in parallel with the action of said buffer transfer means.

10. A terminal computer for access to video servers as defined in any of claims 1, which is in addition provided with:
a server type information storage storing two kinds of codes in paires, one being for identifying the video server and the other being for indicating whether the said video server is the file input-output type or of the stream type, and,
a server type checker which judges by referring to said server type storage whether a request from the video processing application is directed at the stream type server or not and, if so, transfers said request to the request type converter.

11. A terminal computer for access to video servers as defined in claim 10, wherein said server type checker confirms whether the server as a target is registered with said server type information storage, and, if not, inquires of said server whether said server is of the stream type or not, and then registers the results obtained with the server type information storage and at the same time identifies said server type.

12. A method of access to a specific server on the basis of a request from a specific terminal computer in a network formed of a plurality of video servers storing video data and a plurality of terminal computers provided with video processing applications, comprising;
various kind of requests of the file input-output type issued by said video processing applications are converted into requests adapted for access to the stream type video server within said terminal computer and access is gained to the stream type video server on the basis of said converted requests.

13. A method of converting request types as defined in claim 12, wherein a stream type sending request is issued on the basis of a file input-output type file open request or a first file input-output type readout request issued by the video processing application.

14. A method of converting request types as defined in claim 13, wherein stream data obtained from the video server on the basis of said sending request is received and stored in the buffer and the stream data stored in said buffer is transferred to the video processing application on the basis of a readout request issued by the video processing application.

15. A method of converting request types as defined in claim 14, wherein a stream type pause request is issued when the remaining capacity of said buffer falls is a specific level as a result of said data transfer.

16. A method of converting request types as defined in claim 14, wherein a stream type resending request is issued when the remaining capacity of said buffer is above a specific level as a result of said data transfer.

17. A storage medium storing as a program an operating process of access to a specific server on the basis of a request from a specific terminal computer in a network formed of a plurality of video servers storing video data and a plurality of terminal computers provided with video processing applications, comprising;
various kind of requests of the file input-output type issued by said video processing applications are converted into requests adapted for access to the stream type video server within said terminal computer and access is gained to the stream type video server on the basis of said converted requests.

18. A storage medium as defined in claim 17, wherein there is stored as program the operating process of issuing a stream type sending request on the basis of a file input-output type file open request or a first file input-output type reading request issued by the video processing application.
